# EUROPÄISCHE PATENTANMELDUNG

(11) **EP 3 257 762 A1**
(43) Veröffentlichungstag der Anmeldung: **20.12.2017**
(21) Anmeldenummer: 16174425.5
(22) Anmeldetag: 14.06.2016
(51) Int. Cl.: B65B 35/50

(54) **BLISTERSTREIFENSTAPELBILDUNGSVORRICHTUNG MIT FLEXIBLEN FIXIERELEMENTEN**

(71) Anmelder: MediSeal GmbH, 33758 Schloss Holte-Stukenbrock (DE)
(72) Erfinder: Wittemeier, Klaus, 33818 Leopoldshöhe (DE); Biehl, Johann, 33758 Schloss Holte-Stukenbrock (DE); Gosebruch, Harald, 22926 Ahrensburg (DE)
(74) Vertreter: REHBERG HÜPPE + PARTNER

(57) **Zusammenfassung**

Eine Blisterstreifenverpackungsmaschine (1) weist eine Übergabevorrichtung (3) zum Aufnehmen und Weitergeben vereinzelter Blisterstreifen (2) und eine stromabwärts der Übergabevorrichtung (3) angeordnete Blisterstreifenstapelbildungsvorrichtung (7) auf. Die Blisterstreifenstapelbildungsvorrichtung (7) weist eine Mehrzahl insbesondere als Borsten ausgebildeter flexibler Fixierelemente (13) zum Aufnehmen von Stapeln von Blisterstreifen (2) auf.

## Beschreibung

### TECHNISCHES GEBIET DER ERFINDUNG

Die Erfindung betrifft eine Blisterstreifenverpackungsmaschine mit einer Übergabevorrichtung zum Aufnehmen und Weitergeben vereinzelter Blisterstreifen und einer stromabwärts der Übergabevorrichtung angeordneten Blisterstreifenstapelbildungsvorrichtung.

Derartige Maschinen dienen zum Verpacken von Blisterstreifen in einer Sekundärverpackung, insbesondere einer Faltschachtel. Die Primärverpackung ist dabei als Blisterverpackung ausgebildet, bei der sich bestimmte Produkte in den Höfen der Blisterverpackung befinden. Die Blisterverpackung ist durch einer Deckfolie verschlossen. Bei den Produkten handelt es sich insbesondere um Tabletten, Kapseln, Pillen, Spritzen, Ampullen, Fläschchen oder flüssige Arzneimittel. Die fertige Einheit aus der Blisterverpackung und den darin verpackten Produkten wird als Blisterstreifen bezeichnet.

### STAND DER TECHNIK

Eine Blisterstreifenverpackungsmaschine mit einer Übergabevorrichtung zum Aufnehmen und Weitergeben vereinzelter Blisterstreifen und einer stromabwärts der Übergabevorrichtung angeordneten Blisterstreifenstapelbildungsvorrichtung ist aus dem deutschen Patent DE 198 41 508 C1 bekannt. Die Blisterstreifenstapelbildungsvorrichtung ist als Magazinkette mit Magazinen mit starren Magazinwänden ausgebildet, in denen die Blisterstreifen aufeinander abgelegt und somit Stapel von Blisterstreifen gebildet und mit der Magazinkette weitergefördert werden.

### AUFGABE DER ERFINDUNG

Der Erfindung liegt die Aufgabe zugrunde, eine Blisterstreifenverpackungsmaschine und eine Blisterstreifenstapelbildungsvorrichtung bereitzustellen, mit denen flexibel unterschiedlich hohe Stapel von Blisterstreifen gebildet werden können.

### LÖSUNG

Die Aufgabe der Erfindung wird erfindungsgemäß mit den Merkmalen der unabhängigen Patentansprüche gelöst.

Weitere bevorzugte erfindungsgemäße Ausgestaltungen sind den abhängigen Patentansprüchen zu entnehmen.

### BESCHREIBUNG DER ERFINDUNG

Die Erfindung betrifft eine Blisterstreifenverpackungsmaschine mit einer Übergabevorrichtung zum Aufnehmen und Weitergeben vereinzelter Blisterstreifen und einer stromabwärts der Übergabevorrichtung angeordneten Blisterstreifenstapelbildungsvorrichtung. Die Blisterstreifenstapelbildungsvorrichtung weist eine Mehrzahl flexibler Fixierelemente zum Aufnehmen von Stapeln von Blisterstreifen auf.

Die Erfindung betrifft weiterhin eine Blisterstreifenstapelbildungsvorrichtung mit einem ersten umlaufend antreibbaren Fördermittel mit einer äußeren Oberfläche, an der eine Mehrzahl flexibler Fixierelemente angeordnet ist und sich von dieser weg erstreckt. Die Blisterstreifenstapelbildungsvorrichtung weist weiterhin ein zweites umlaufend antreibbares Fördermittel mit einer äußeren Oberfläche auf, wobei die flexiblen Fixierelemente an der äußeren Oberfläche angeordnet sind und sich von dieser weg erstrecken. Das erste Fördermittel und das zweite Fördermittel sind so beabstandet und gegenüberliegend angeordnet und so gegenläufig antreibbar und die flexiblen Fixierelemente so ausgebildet und angeordnet, dass zwischen den Fördermitteln Blisterstreifen aufnehmbar und Stapel von Blisterstreifen bildbar sind.

Die Blisterstreifenstapelbildungsvorrichtung ist zum Aufnehmen von Blisterstreifen und zum Bilden von Stapel aus den Blisterstreifen ausgebildet. Ein Stapel von Blisterstreifen weist in der Regel eine Mehrzahl von Blisterstreifen auf. Es ist aber auch möglich, dass ein Stapel nur einen einzigen Blisterstreifen aufweist. In dieser Anmeldung ist der Begriff eines Stapels von Blisterstreifen also so zu verstehen, dass mindestens ein Blisterstreifen in dem Stapel vorhanden ist. Ein Blisterstreifenstapel kann also einen Blisterstreifen, zwei Blisterstreifen, drei Blisterstreifen, vier Blisterstreifen, fünf Blisterstreifen, sechs Blisterstreifen oder mehr Blisterstreifen aufweisen. Er kann insbesondere zwischen einen und sechs Blisterstreifen und insbesondere zwischen zwei und sechs Blisterstreifen aufweisen.

Unter einem Stapel von Blisterstreifen mit mehr als einem Blisterstreifen ist dabei eine räumlich eng benachbarte Anordnung dieser Mehrzahl von Blisterstreifen zu verstehen. Ein Stapel bedeutet aber nicht, dass sich die Blisterstreifen kontaktieren müssen. In Abhängigkeit von der Dicke und den Abständen der flexiblen Fixierelemente können sich geringfügige Abstände zwischen den Blisterstreifen in dem jeweiligen Stapel ergeben.

Die Stapelbildung und der Weitertransport der Stapel erfolgt durch und in der neuen Blisterstreifenstapelbildungsvorrichtung. Hierfür weist diese keine starren Magazine oder dergleichen, sondern eine Mehrzahl, insbesondere eine Vielzahl, von flexiblen Fixierelementen auf, die die Blisterstreifen an mindestens zwei Seiten von oben und unten kontaktieren und somit festsetzen. Die flexiblen Fixierelemente an den zwei Seiten der Blisterstreifen werden koordiniert angetrieben, so dass die Blisterstreifen in einer Förderrichtung gefördert werden.

Nach dem Einlegen eines Blisterstreifens zwischen die flexiblen Fixierelemente der Blisterstreifenbildungsvorrichtung wird mittels des Antriebs die Blisterstreifenstapelbildungsvorrichtung so weiter bewegt, dass der eben erwähnte Blisterstreifen von der Einlegestelle ausreichend weit weg bewegt wird und somit Platz für den nächsten einzulegenden Blisterstreifen geschaffen wird. Die Strecke der Weiterbewegung entspricht also mindestens der Höhe eines Blisterstreifens (BH). Sie ist oftmals aber etwas größer, um Toleranzen auszugleichen und sicherzustellen, dass der folgende Blisterstreifen in der korrekten Position zwischen die flexiblen Fixierelemente eingeschoben werden kann.

Zwischen dem letzten Blisterstreifen eines Stapels und dem ersten Blisterstreifen des nachfolgenden Stapels wird zusätzlich eine größere Lücke (LH) erzeugt. Die Gesamtlücke zwischen zwei Stapeln entspricht also der Summe aus BH und LH. Die Lücke LH schafft Raum für den Ausschiebevorgang eines Stapels von Blisterstreifen am stromabwärtigen Ende der Blisterstreifenstapelbildungsvorrichtung. Die Lücke LH hat eine Höhe von mindestens etwa 8 mm, insbesondere mindestens etwa 10 mm. Sie verhindert den Reibschluss zwischen dem obersten Blisterstreifen des auszuschiebenden Stapels und dem untersten Blisterstreifen des nachfolgenden Stapels. Zudem ermöglicht sie, dass das Schieberelement höher als der auszuschiebende Stapel sein kann, was für einen zuverlässigen Ausschiebevorgang vorteilhaft ist.

Der Ausschiebevorgang findet vorzugsweise während eines Blistertakts statt. Somit kommt es zu einer Relativbewegung zwischen dem Blisterstreifenstapel und dem Schieberelement. Einem ungewollten Verschieben der Blisterstreifen in dem Stapel relativ zueinander kann beispielsweise durch Führungselemente für die Blisterstreifen entgegengewirkt werden. Der Ausschiebevorgang kann schneller sein als der Blistertakt, um eine Berührung des darüberliegenden Blisterstreifens durch das Schieberelement zu verhindern.

Die Übergabevorrichtung übernimmt die bereits geschnittenen Blisterstreifen insbesondere aus einem Magazin, in dem die Blisterstreifen gestapelt sind. Die Übergabevorrichtung dient nun zum Vereinzeln der Blisterstreifen, also zum einzelnen Entnehmen aus dem Stapel und zum Weiterfördern der vereinzelten Blisterstreifen. In dieser vereinzelten Stellung der Blisterstreifen kann nun eine Qualitätskontrolle stattfinden. Nicht ordnungsgemäße Blisterstreifen werden aus dem Materialfluss ausgesondert und nicht von der Übergabevorrichtung an die Blisterstreifenstapelbildungsvorrichtung weitergegeben. Die Übergabevorrichtung dient also auch zum Ermöglichen der Qualitätskontrolle. Somit gelangen nur ordnungsgemäße Blisterstreifen in die Blisterstreifenstapelbildungsvorrichtung. Bei den in der Blisterstreifenstapelbildungsvorrichtung gebildeten Stapeln handelt es sich dann entweder um vorläufige Stapel, die im weiteren Verlauf des Materialflusses noch geändert werden, oder endgültige Stapel, die später in dieser Zusammenstellung in eine Sekundärverpackung eingebracht werden.

Die Fixierelemente sind insbesondere nicht biegesteif ausgebildet, sondern so biegsam, dass sie ihre Form beim Einbringen der Blisterstreifen zwischen die Fixierelemente flexibel verändern. Die entsprechenden Seitenflächen der Blisterstreifen und ein Teil der Oberseite und der Unterseite der Blisterstreifen im Bereich dieser Seitenflächen wir dann zwischen den biegsamen Fixierelementen festgesetzt. Somit kann die Position des jeweiligen Blisterstreifens in der Förderrichtung der Blisterstreifenstapelbildungsvorrichtung gesehen praktisch beliebig bestimmt werden. Eine geringfügige nicht bestimmbare Positionierung ergibt sich dadurch, dass sich die Fixierelemente beim Kontakt mit dem jeweiligen Blisterstreifen in eine nicht genau vorhersagbare Richtung verbiegen (nach oben oder unten) und somit in einer nicht ganz exakt vorhersagbaren Richtung der Freiraum entsteht, den der jeweilige Blisterstreifen einnimmt. Diese Abweichungen sind aber derart gering, dass sie keinen negativen Einfluss auf die gewünschte Stapelbildung haben.

Die flexiblen Fixierelemente können beispielsweise aus Fasern oder Draht bestehen. Diese weisen die erforderliche Flexibilität und Biegsamkeit auf, um bei einem Kontakt mit den Blisterstreifen leicht auszuweichen, ohne die Blisterstreifen dabei zu beschädigen. Gleichzeitig verbleiben sie dann zuverlässig in dieser ausgelenkten Position und sichern somit die Position des Blisterstreifens in dem Stapel.

Die flexiblen Fixierelemente können insbesondere als Borsten ausgebildet sein. Die Blisterstreifenstapelbildungsvorrichtung weist dann quasi Bürstenelemente auf, zwischen deren Borsten die Seiten der Blisterstreifen gesteckt werden. Die Blisterstreifenstapelbildungsvorrichtung weist dabei insbesondere zwei gegenüberliegend und spiegelsymmetrisch angeordnete Bürstenelemente auf, so dass die Blisterstreifen mit zwei gegenüberliegenden Seiten in jeweils eines der Bürstenelemente gesteckt werden.

Die Blisterstreifenstapelbildungsvorrichtung kann ein erstes umlaufend antreibbares Fördermittel mit einer äußeren Oberfläche aufweisen, wobei die flexiblen Fixierelemente an der äußeren Oberfläche angeordnet sind und sich von dieser weg erstrecken. Die Blisterstreifenstapelbildungsvorrichtung weist dann weiterhin ein zweites umlaufend antreibbares Fördermittel mit einer äußeren Oberfläche auf, wobei die flexiblen Fixierelemente an der äußeren Oberfläche angeordnet sind und sich von dieser weg erstrecken. Das erste Fördermittel und das zweite Fördermittel sind dann so beabstandet und gegenüberliegend angeordnet und so gegenläufig antreibbar und die flexiblen Fixierelemente so ausgebildet und angeordnet, dass zwischen den Fördermitteln Blisterstreifen aufnehmbar und Stapel von Blisterstreifen bildbar sind. Man kann sich diese Konstellation also in etwa so wie die Aufnahme der Blisterstreifen zwischen zwei gegenüberliegenden Bürstenbändern vorstellen, deren Borsten nach innen weisen. Es handelt sich aber nicht um feststehende Bürsten bzw. Borsten. Die Borsten sind an umlaufend antreibbaren Fördermitteln befestigt. Die Fördermittel weisen dabei entgegengesetzte Drehrichtungen auf, so dass sie eine gemeinsame Förderrichtung für die zwischen den Fördermitteln und deren Fixierelementen aufgenommenen Blisterstreifen bereitstellen.

Das erste Fördermittel und das zweite Fördermittel können so ausgebildet und angeordnet sein, dass ein erstes Paar gegenüberliegender Seitenflächen der Blisterstreifen zwischen den flexiblen Fixierelementen des ersten Fördermittels und des zweiten Fördermittels fixiert wird.

Die Blisterstreifenstapelbildungsvorrichtung kann ein drittes umlaufend antreibbares Fördermittel mit einer äußeren Oberfläche aufweisen, wobei die flexiblen Fixierelemente an der äußeren Oberfläche angeordnet sind und sich von dieser weg erstrecken. Die Blisterstreifenstapelbildungsvorrichtung kann ein viertes umlaufend antreibbares Fördermittel mit einer äußeren Oberfläche aufweisen, wobei die flexiblen Fixierelemente an der äußeren Oberfläche angeordnet sind und sich von dieser weg erstrecken. Das dritte Fördermittel und das vierte Fördermittel können so beabstandet und gegenüberliegend angeordnet und so gegenläufig antreibbar und die flexiblen Fixierelemente so ausgebildet und so angeordnet sein, dass zwischen den Fördermitteln Blisterstreifen aufnehmbar und Stapel von Blisterstreifen bildbar sind. Das dritte Fördermittel und das vierte Fördermittel können so um 90° versetzt zum ersten Fördermittel und zum zweiten Fördermittel angeordnet sein, dass ein um 90° versetzt zum ersten Paar gegenüberliegender Seitenflächen der Blisterstreifen angeordnetes zweites Paar gegenüberliegender Seitenflächen der Blisterstreifen zwischen den flexiblen Fixierelementen des dritten Fördermittels und des vierten Fördermittels fixiert wird. Das dritte Fördermittel und das vierte Fördermittel sind also in einer anderen Richtung wirksam als das erste Fördermittel und das zweite Fördermittel. Es liegt dabei eine teilweise Überlappung der Paare vor, um eine sichere Übergabe der Blisterstreifen vom ersten und zweiten Fördermittel zum dritten und vierten Fördermittel zu gewährleisten. Beim Weitertransport werden die Blisterstreifen dann aber nur noch vom dritten und vierten Fördermittel geführt. In diesem Bereich sind das erste und zweite Fördermittel nicht mehr vorhanden. In dieser Weise wird ein Freiraum in dem Bereich geschaffen, in dem sich stromaufwärts das erste Fördermittel und das zweite Fördermittel befinden. Dieser Freiraum wird genutzt, um den zwischen dem dritten Fördermittel und dem vierten Fördermittel fixierten Stapel ausschieben und einer Weiterverarbeitung zuführen zu können.

Die Blisterstreifenstapelbildungsvorrichtung kann direkt stromabwärts der Übergabevorrichtung angeordnet und die Übergabevorrichtung so ausgebildet sein, dass sie die Blisterstreifen direkt an die Blisterstreifenstapelbildungsvorrichtung weitergibt. In diesem Fall kann man die Blisterstreifenstapelbildungsvorrichtung auch als Direktstapler bezeichnen, was bedeutet, dass direkt nach der Übergabevorrichtung die Bildung von Stapeln beginnt. Im Stand der Technik ist oftmals im Anschluss an die Übergabevorrichtung ein Fördermittel vorgesehen, in dem die Blisterstreifen vereinzelt weitergefördert und erst später Stapel gebildet werden. Unter der Anordnung "direkt" stromabwärts ist nun also zu verstehen, dass keine anderen Förderelemente zwischengeschaltet sind. Es wäre aber ebenfalls möglich, dass die Blisterstreifenstapelbildungsvorrichtung nicht direkt stromabwärts der Übergabevorrichtung angeordnet ist, d. h. andere Förderelemente zwischen der Blisterstreifenstapelbildungsvorrichtung und der Übergabevorrichtung angeordnet sind.

Die Übergabevorrichtung und/oder die Blisterstreifenstapelbildungsvorrichtung können getaktet angetrieben sein. Ein solcher getakteter Antrieb ist von einem kontinuierlichen Antrieb zu unterscheiden.

Die Übergabevorrichtung kann als rotierend angetriebenes Blisterstreifenrad mit einer Mehrzahl von Aufnahmearmen ausgebildet sein. Die Aufnahmearme weisen dann insbesondere Aufnahmeelemente, z. B. Unterdrucksauger, auf, mit denen die Blisterstreifen insbesondere an der den Höfen abgewandten Seite gehalten werden. Die Aufnahmearme bewegen sich dann noch relativ zu dem rotierenden Blisterstreifenrad. Hierdurch wird mit einem Blisterstreifenrad die Vereinzelung eines ersten Blisterstreifens aus einem Zuführstapel und gleichzeitig die Übergabe eines anderen Blisterstreifens an die Blisterstreifenstapelbildungsvorrichtung realisiert.

Die Stapel von Blisterstreifen können senkrecht oder geneigt angeordnet sein. Hierdurch ergibt sich aufgrund der Schwerkraft eine gewisse Selbstausrichtung der Blisterstreifen zwischen den flexiblen Fixierelementen der benachbarten Fördermittel der Blisterstreifenstapelbildungsvorrichtung. Eine andere Ausrichtung und insbesondere eine horizontale Ausrichtung wäre aber ebenfalls möglich.

Das Blisterstreifenrad kann insbesondere kontinuierlich rotierend angetrieben sein, während sich die einzelnen Aufnahmearme unabhängig voneinander wiederum rotierend bewegen. Dies geschieht wiederum vorzugsweise kontinuierlich, könnte aber auch diskontinuierlich erfolgen. Bei einer Drehung des Blisterstreifenrads um 360° können sich die Aufnahmearme relativ zum Blisterstreifenrad ebenfalls um 360° drehen.

Das Schieberelement hat vorzugsweise eine Höhe, die mindestens der maximalen Höhe eines Stapels von Blisterstreifen entspricht. Die Höhe ist insbesondere etwas größer ausgebildet, so dass der Stapel sicher durch das Schieberelement verschoben werden kann. Das Schieberelement kann so ausgebildet sein, dass seine Höhe einstellbar ist, um eine Anpassung an unterschiedliche Stapelhöhen von Blisterstreifen vorzunehmen.

Die Abstände zwischen den Paaren von Fördermitteln der Blisterstreifenstapelbildungsvorrichtung können einstellbar ausgebildet sein. Somit können Blisterstreifen unterschiedlicher Abmessungen mit der Blisterstreifenstapelbildungsvorrichtung gefördert werden.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Übergabevorrichtung die Rede ist, ist dies so zu verstehen, dass genau eine Übergabevorrichtung, zwei Übergabevorrichtungen oder mehr Übergabevorrichtungen vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine perspektivische Ansicht einer ersten beispielhaften Ausführungsform der neuen Blisterstreifenverpackungsmaschine.
- **Fig. 2**: zeigt eine Seitenansicht der Blisterstreifenverpackungsmaschine gemäß Fig. 1.
- **Fig. 3**: zeigt eine perspektivische Ansicht der Blisterstreifenverpackungsmaschine gemäß Fig. 1 von schräg vorne.
- **Fig. 4**: zeigt eine perspektivische Ansicht der Blisterstreifenverpackungsmaschine gemäß Fig. 1 von vorne.
- **Fig. 5**: zeigt eine perspektivische Ansicht der Blisterstreifenverpackungsmaschine gemäß Fig. 1 von hinten.
- **Fig. 6**: zeigt eine schematische Ansicht der Blisterstreifenverpackungsmaschine.
- **Fig. 7**: zeigt eine schematische Detailansicht eines Teils der Blisterstreifenstapelbildungsvorrichtung der Blisterstreifenverpackungsmaschine.
- **Fig. 8**: zeigt eine schematische Ansicht der taktweise betriebenen Blisterstreifenstapelbildungsvorrichtung mit vier Takten anhand eines Stapels mit vier Blisterstreifen.
- **Fig. 9**: zeigt eine schematische Ansicht des Takts 1 und 2 aus Fig. 8 und von Zwischentakten.
- **Fig. 10**: zeigt eine schematische Ansicht der taktweise betriebenen Blisterstreifenstapelbildungsvorrichtung mit fünf Takten anhand eines Stapels mit einem Blisterstreifen.
- **Fig. 11**: zeigt eine schematische Ansicht des Takts 1 und 2 aus Fig. 10 und von Zwischentakten.

### FIGURENBESCHREIBUNG

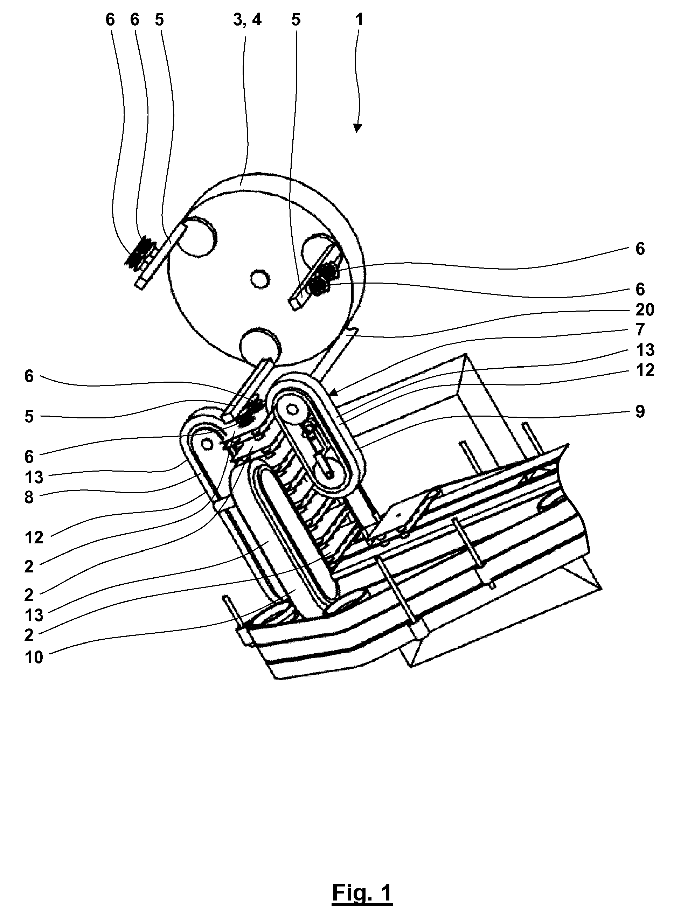

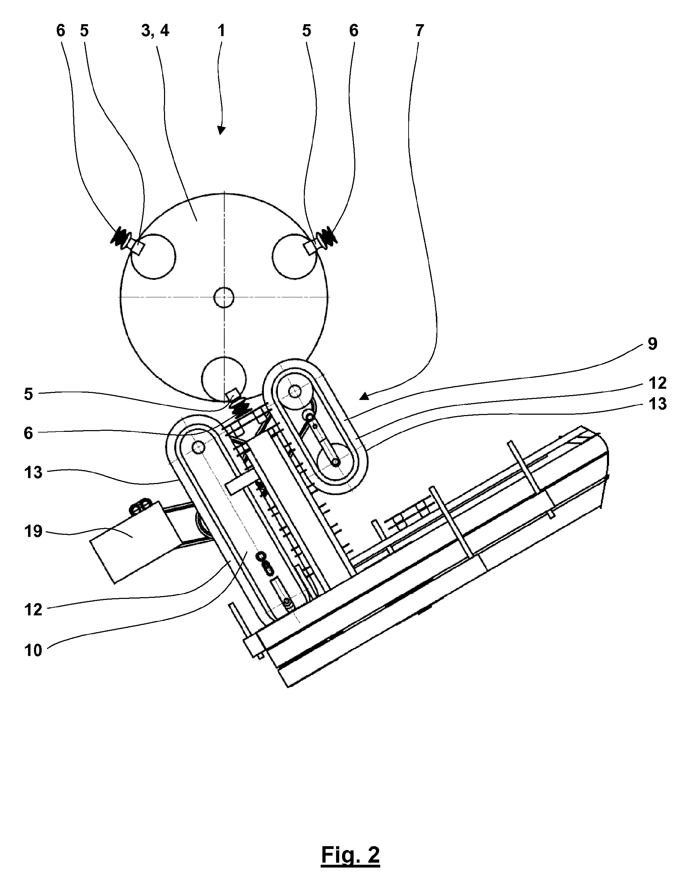

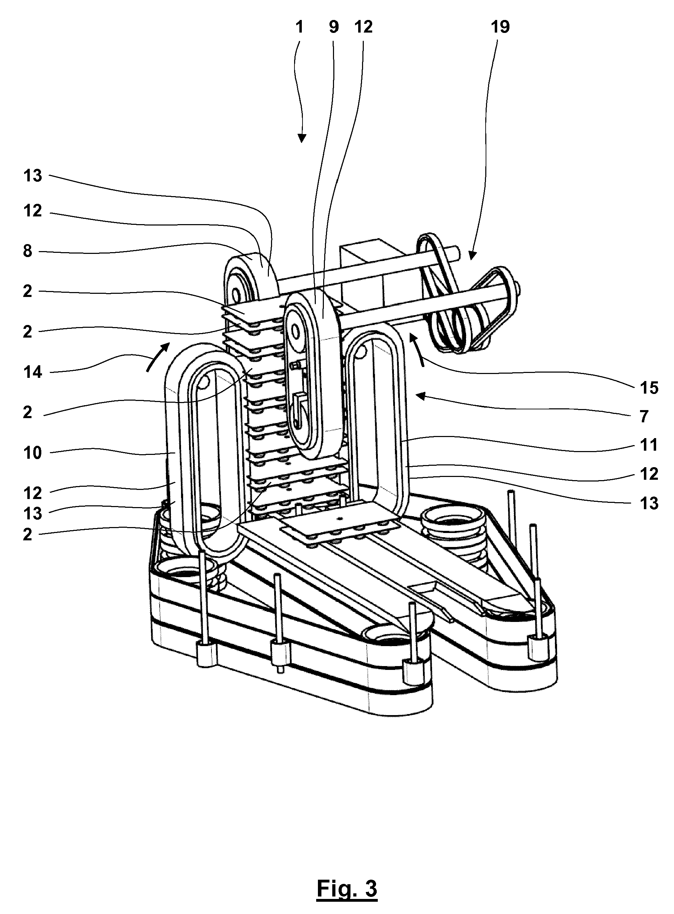

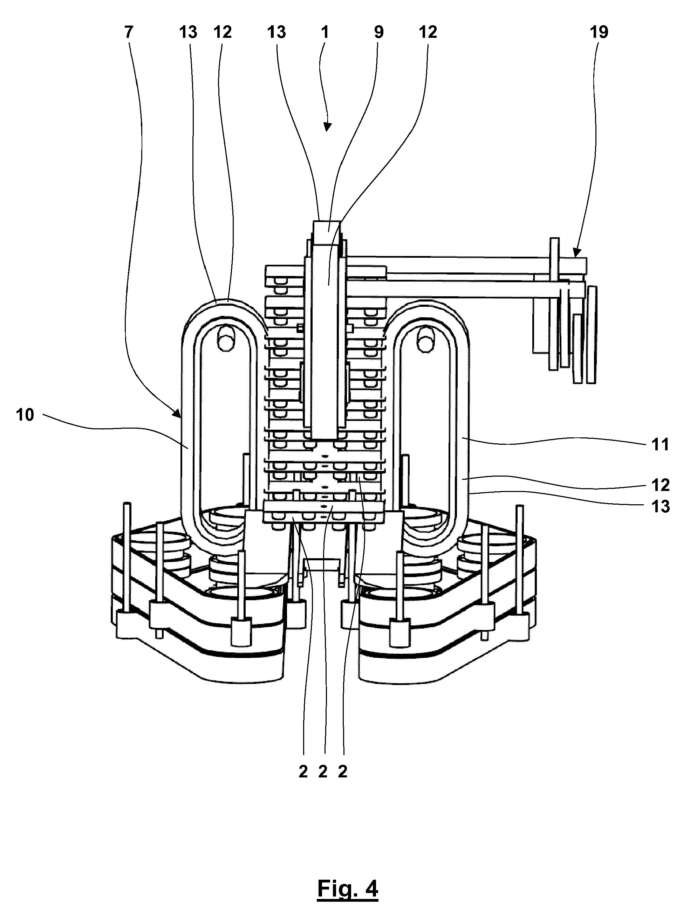

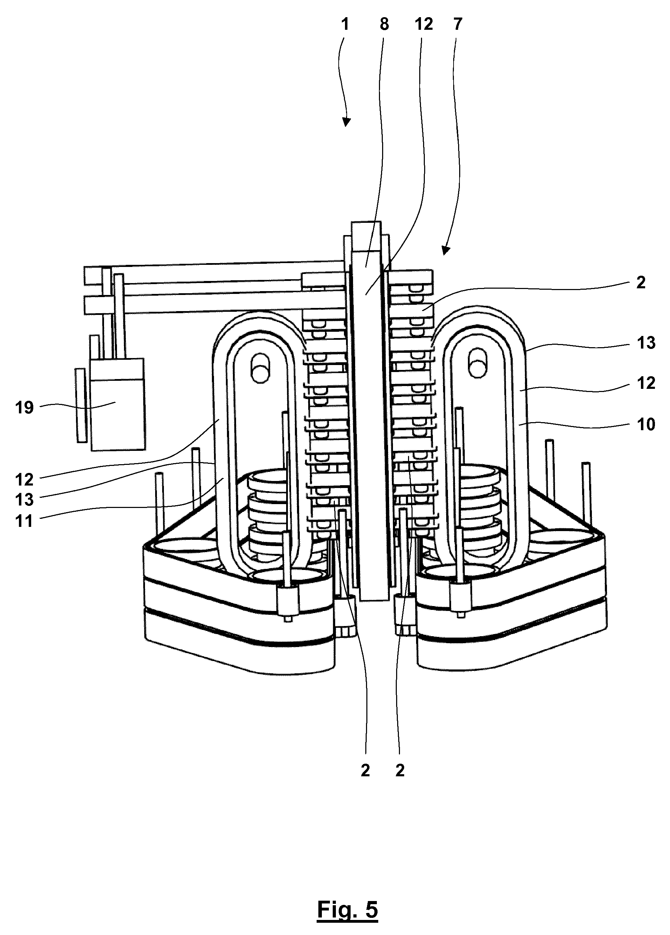

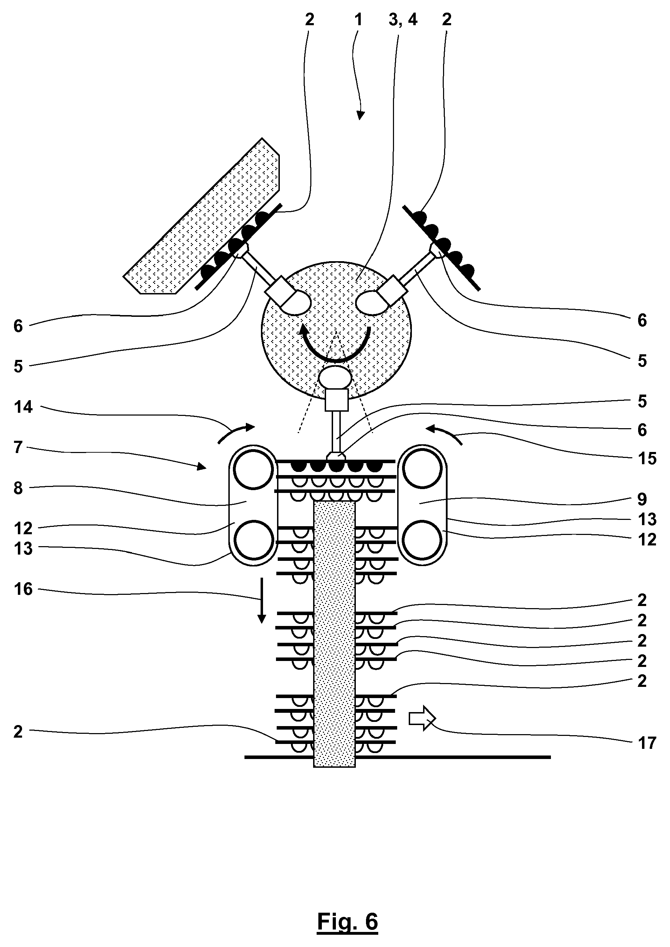

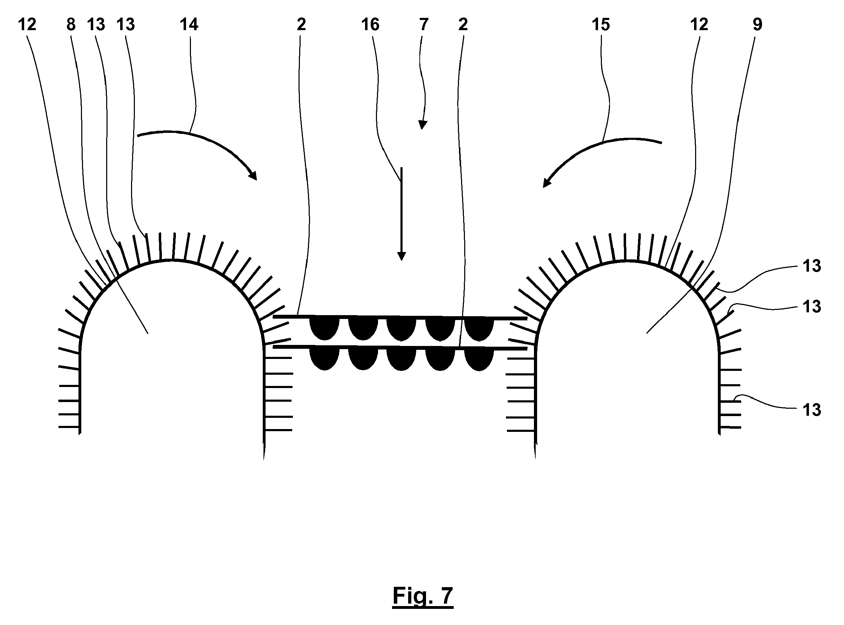

**Fig. 1-5** zeigen verschiedene Ansichten eines Teils einer ersten beispielhaften Ausführungsform einer neuen Blisterstreifenverpackungsmaschine 1. **Fig. 6** zeigt eine schematische Ansicht eines Teils der Blisterstreifenverpackungsmaschine 1. **Fig. 7** zeigt eine schematische Detailansicht einer Blisterstreifenstapelbildungsvorrichtung 7.

Die Blisterstreifenverpackungsmaschine 1 weist noch weitere Teile stromaufwärts und stromabwärts auf. Die Teile stromaufwärts dienen zum Herstellen der einzelnen Blisterstreifen 2 dienen. Die Blisterstreifen 2 werden zunächst endlos hergestellt und dann mittels einer Schneideeinrichtung in einzelne Blisterstreifen 2 zerteilt. Diese einzelnen Blisterstreifen 2 werden dann in einem Zuführstapel gesammelt und dem Teil der Blisterstreifenverpackungsmaschine 1 zugeführt, der in den Zeichnungen dargestellt ist.

Stromabwärts des dargestellten Teils der Blisterstreifenverpackungsmaschine 1 erfolgt die Weiterverarbeitung der Blisterstreifen 2 und insbesondere das Einbringen in eine Sekundärverpackung. Bei einer solchen Sekundärverpackung handelt es sich insbesondere um eine Faltschachtel. Oftmals werden die Blisterstreifen 2 gemeinsam mit einem Beipackzettel in eine solche Faltschachtel eingebracht.

Da diese Aspekte der Blisterstreifenverpackungsmaschine 1 stromaufwärts und stromabwärts dem Fachmann geläufig sind, werden diese nicht detaillierter beschrieben.

Die Blisterstreifenverpackungsmaschine 1 weist eine Übergabevorrichtung 3 zum Aufnehmen und Weitergeben der vereinzelten Blisterstreifen 2 auf. Im vorliegenden Fall handelt es sich bei der Übergabevorrichtung 3 um ein rotierend angetriebenes Blisterstreifenrad 4 mit einer Mehrzahl von Aufnahmearmen 5. An den Aufnahmearmen 5 sind Saugelemente 6 angebracht, an denen ein von einer nicht dargestellten Unterdruckquelle bereitgestellter Unterdruck anliegt und durch die die Übergabevorrichtung 3 somit die Blisterstreifen 2 beim Anlegen des Unterdrucks festhält und beim Abschalten des Unterdrucks freigibt. Die Funktionsweise eines solchen Blisterstreifenrads 4 ist im Stand der Technik für sich genommen bekannt, so dass weitere diesbezügliche Erläuterungen nicht erforderlich sind. Es wird insbesondere auf das deutsche Patent DE 198 41 598 C1 der Anmelderin und die dort als Fördereinrichtung mit einem Rotor mit mehreren Armen bezeichnete Übergabevorrichtung verwiesen (siehe insbesondere Spalte 5, Zeile 62 bis Spalte 6, Zeile 29).

Zwischen dem Aufnehmen des jeweiligen Blisterstreifens 2 durch die Übergabevorrichtung 3 und dem Abgeben des Blisterstreifens 2 durch die Übergabevorrichtung 3 findet eine Qualitätsprüfung des Blisterstreifens 2 statt. Nicht ordnungsgemäße Blisterstreifen 2 ("Fehlblister") werden ausgesondert und gelangen somit nicht in den normalen Materialfluss stromabwärts.

Stromabwärts der Übergabevorrichtung 3 ist eine Blisterstreifenstapelbildungsvorrichtung 7 angeordnet. Die Blisterstreifenstapelbildungsvorrichtung 7 dient zum Bilden von Stapeln ordnungsgemäßer Blisterstreifen 2 und zum Weitertransport dieser Stapel. Unter einem Stapel ist mindestens ein Blisterstreifen 2 zu verstehen. Oftmals weist ein Stapel aber eine Mehrzahl von Blisterstreifen 2 auf. Die Blisterstreifen 2 müssen sich aber innerhalb des Stapels nicht berühren, sondern können insbesondere unter vergleichsweise geringen Abständen zueinander angeordnet sein. Die Blisterstreifenstapelbildungsvorrichtung 7 nimmt gleichzeitig eine Mehrzahl von Stapeln auf, die beabstandet zueinander angeordnet sind.

Die Blisterstreifenstapelbildungsvorrichtung weist ein erstes umlaufend antreibbares Fördermittel 8, ein zweites umlaufend antreibbares Fördermittel 9, ein drittes umlaufend antreibbares Fördermittel 10 und ein viertes umlaufend antreibbares Fördermittel 11 auf. Es ist hier erkennbar, dass das zweite Fördermittel 9 hier mittels einer Antriebswelle 20 angetrieben ist. Entsprechendes gilt für die anderen Fördermittel 8, 10 und 11. Jedes der Fördermittel 8, 9, 10, 11 weist eine äußere Oberfläche 12 mit einer Vielzahl flexibler Fixierelemente 13 auf. Bei den flexiblen Fixierelementen 13 handelt es sich um kleine, nicht biegesteife, also biegsame, flexible Borsten auf. Diese sind in den Fig. 1-6 nicht einzeln darstellt. Sie sind aber zeichnerisch dadurch symbolisiert, dass die Bezugszeichenlinien der Oberflächen 12 etwas länger als die der Fixierelemente 13 sind. In der Detailzeichnungen gemäß Fig. 7 sind die flexiblen Fixierelemente 13 aber gut erkennbar.

Die Fördermittel 8, 9 bilden ein erstes Fördermittelpaar und die Fördermittel 10, 11 ein zweites Fördermittelpaar. Das erste Fördermittelpaar ist dabei relativ gesehen stromaufwärts angeordnet, während das zweite Fördermittelpaar relativ gesehen stromabwärts angeordnet ist. Anders gesagt werden die Blisterstreifen 2 durch das erste Fördermittelpaar aufgenommen, dann sukzessive an das zweite Fördermittelpaar übergeben und danach vom zweiten Fördermittelpaar abgegeben.

Es ist weiterhin erkennbar, dass die Fördermittelpaare um 90° versetzt angeordnet sind und somit in um 90° versetzt angeordnete Seitenflächen der Blisterstreifen 2 eingreifen. Das erste Fördermittel 8 erstreckt sich über die gesamte Länge bzw. Höhe der Blisterstreifenstapelbildungsvorrichtung 7, während sich das zweite Fördermittel 9 nur über einen Teil der Länge bzw. Höhe der Blisterstreifenstapelbildungsvorrichtung 7 erstreckt. Dies dient dazu, um den für das Abführen der Stapel von Blisterstreifen 2 in der Abtransportrichtung 17 erforderlichen Freiraum zu schaffen.

Die Fördermittel 10, 11 wiederum erstrecken sich ebenfalls nur über einen Teil der Länge bzw. Höhe der Blisterstreifenstapelbildungsvorrichtung 7 und ermöglichen somit das Zuführen der Blisterstreifen 2 durch die Übergabevorrichtung 3.

Innerhalb eines Fördermittelpaars werden die jeweiligen Fördermittel 8, 9 bzw. 10, 11 jeweils entgegengesetzt in den Drehrichtungen 14 bzw. 15 und die beiden Fördermittelpaare so übereinstimmend angetrieben, dass sich insgesamt eine Förderrichtung 16 für die Blisterstreifen 2 ergibt.

In Fig. 7 sind nun anhand einer vergrößerten schematischen Darstellung die flexiblen Fixierelemente 13 erkennbar. Die Darstellung ist dabei nicht maßstabsgerecht. Tatsächlich sind die Fixierelemente 13 wesentlich kleiner und zudem dichter nebeneinander angeordnet. Die flexiblen Fixierelemente 13 sind an der Oberfläche 12 der Fördermittel 8, 9 befestigt und werden somit in der Drehrichtung 14 bzw. 15 angetrieben. Bei den flexiblen Fixierelementen 13 handelt es sich um Borsten, Fasern, Fäden, dünne Drähte oder andere vergleichbare nachgiebige und biegsame Elemente, zwischen denen sich die Seitenflächen der Blisterstreifen 2 festsetzen lassen. Die Seitenflächen der Blisterstreifen 2 treten dabei also zwischen die flexiblen Fixierelemente 13 ein und verbiegen diese entweder nach oben oder nach unten. Anders gesagt weichen die flexiblen Fixierelemente 13 beim Einbringen des Blisterstreifens 2 nach oben oder unten aus, um dann entweder an der Oberseite oder der Unterseite des jeweiligen Blisterstreifens 2 anzuliegen. In dieser Weise können die Blisterstreifen 2 sehr variabel und an vorher nicht genau bestimmten Positionen zwischen den Förderelementen 8, 9 bzw. 10, 11 aufgenommen und von diesen in der Förderrichtung 16 weiter transportiert werden.

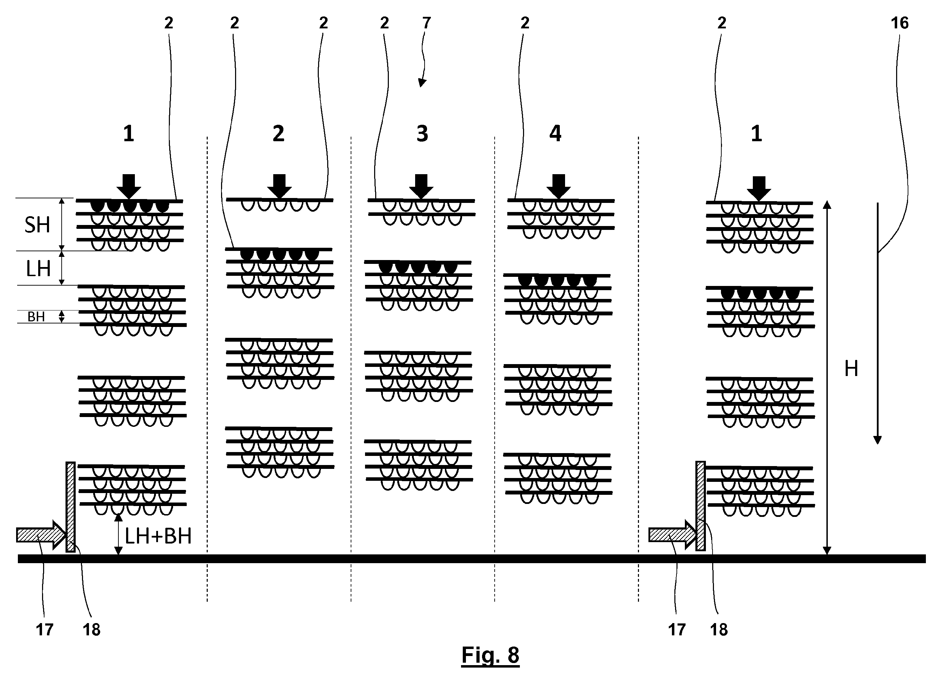

Wie die Blisterstreifen 2 mittels der Blisterstreifenstapelbildungsvorrichtung 7 zu Stapeln geformt und weitertransportiert werden, wird nun anhand der **Fig. 8-11** weiter beschrieben.

In **Fig. 8** ist die Bewegung der Stapel von Blisterstreifen 2 bei einem taktweisen Betrieb der Fördermittel 8, 9, 10 und 11 gezeigt. In diesem Beispiel handelt es sich um Stapel mit jeweils vier Blisterstreifen 2. Vier solche Stapel sind gleichzeitig in der Blisterstreifenstapelbildungsvorrichtung 7 vorhanden. Diese weist vier Takte, die im oberen Bereich der Zeichnung mit den Ziffern 1, 2, 3 und 4 bezeichnet sind. Daran schließt sich wiederum der ganz rechts gezeigte erneute Takt 1 an. Um die Bewegung der Blisterstreifen 2 nachvollziehen zu können, wurde einer der Blisterstreifen 2 in schwarzer Farbe hervorgehoben. Die Gesamthöhe vom oberen Ende der Zuführposition bis zum unteren Ende der Abtransportposition in der Blisterstreifenstapelbildungsvorrichtung 7 ist hier mit H gekennzeichnet.

In Takt 1 ganz links ist zunächst erkennbar, dass dort vier Stapel jeweils mit der Stapelhöhe SH vorhanden sind. Zwischen den Stapel befinden sich Lücken mit der Höhe LH. Der unterste Stapel wird mittels eines Schieberelements 18 in der Abtransportrichtung 17 aus der Blisterstreifenstapelbildungsvorrichtung 7 ausgeschoben. Die Lücke dieses untersten Stapels nach unten entspricht der Summe von LH und BH (BH = Höhe eines Blisterstreifens 2).

In Takt 1 wird am oberen Ende der Blisterstreifenstapelbildungsvorrichtung 7 der dunkel hervorgehobene Blisterstreifen 2 hinzugefügt, so dass der oberste Stapel vervollständigt ist.

Von Takt 1 zu Takt 2 wird die Blisterstreifenstapelbildungsvorrichtung 7 um SH nach unten weiterbewegt. Ein neuer nun oberster Blisterstreifen 2 wird in die Blisterstreifenstapelbildungsvorrichtung 7 eingebracht.

Von Takt 2 zu Takt 3 wird die Blisterstreifenstapelbildungsvorrichtung 7 nun mindestens um die Strecke BH weiterbewegt. Sie wird aber praktisch etwas mehr weiterbewegt, um Toleranzen ausgleichen zu können und sicherzustellen, dass der nächste oberste Blisterstreifen 2 eingebracht werden kann, ohne den darunter angeordneten Blisterstreifen 2 in ungünstiger Weise zu berühren.

Die entsprechende Bewegung erfolgt dann auch in Takt 4. Dabei befindet sich der unterste Stapel mit Blisterstreifen 2 in der Ausschiebeposition und wird mittels des Schieberelements 18 in der Abtransportrichtung 17 aus der Blisterstreifenstapelbildungsvorrichtung 7 entfernt.

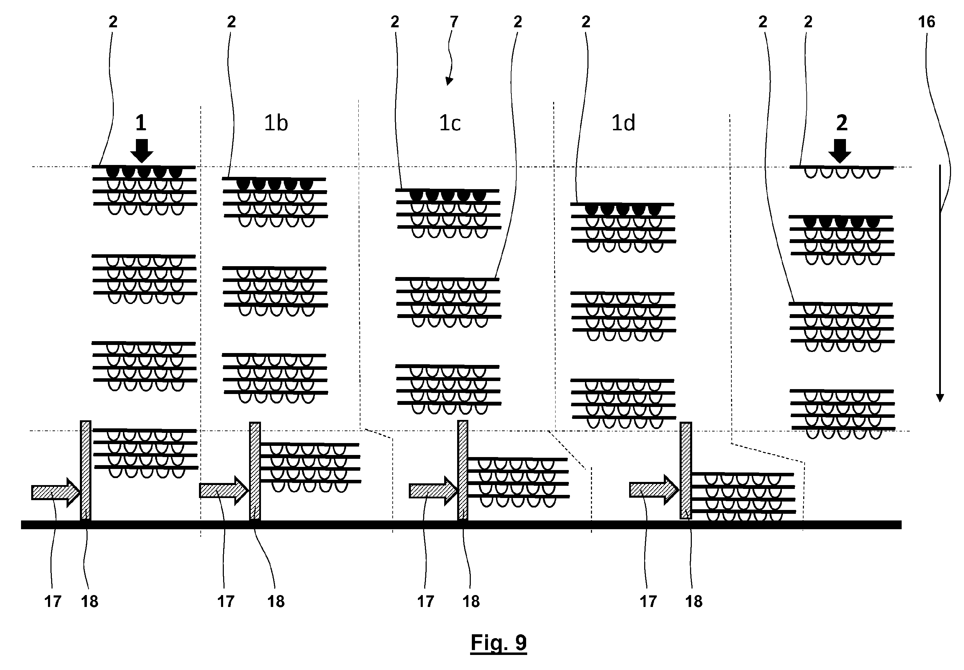

In **Fig. 9** sind nun Details des Takts 1 bzw. der Vorgänge zwischen Takt 1 und Takt 2 gemäß Fig. 8 gezeigt. Die Zwischenpositionen sind dabei mit den oben angeordneten Ziffern 1 b, 1 c und 1 d bezeichnet. Es ist erkennbar, dass die Stapel in der Zeitspanne zwischen Takt 1 und Takt 2 um die Summe aus LH und BH abgesenkt und gleichzeitig ausgeschoben werden müssen. Dabei kommt es zu einer Relativbewegung zwischen dem Schieberelement 18 und den Kanten der Blisterstreifen 2. Einen daraus resultierenden negativen Einfluss auf die bündige Anordnung des Stapels kann beispielsweise durch Stapelführungselemente verhindert werden.

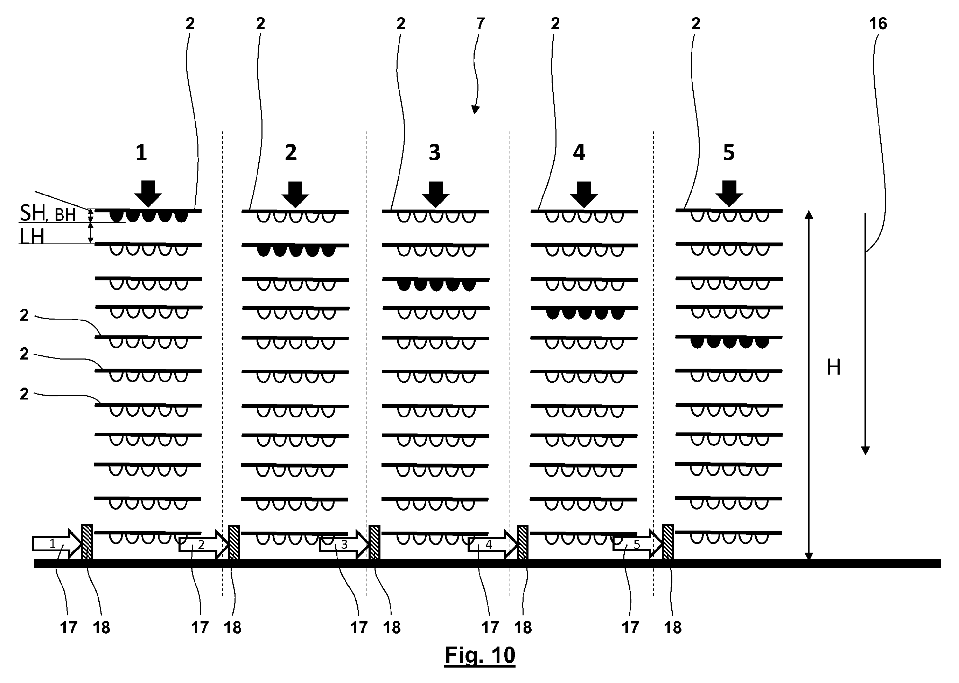

In **Fig. 10** ist eine Fig. 8 entsprechende Ansicht dargestellt, wobei in diesem Beispiel jeder Stapel nur einen Blisterstreifen 2 aufweist. Dementsprechend stimmen also die Stapelhöhe SH und die Blisterstreifenhöhe BH überein. Es sind fünf Takte vorhanden. Während jedes Takts erfolgt ein Ausschieben eines Stapels mit jeweils einem Blisterstreifen 2.

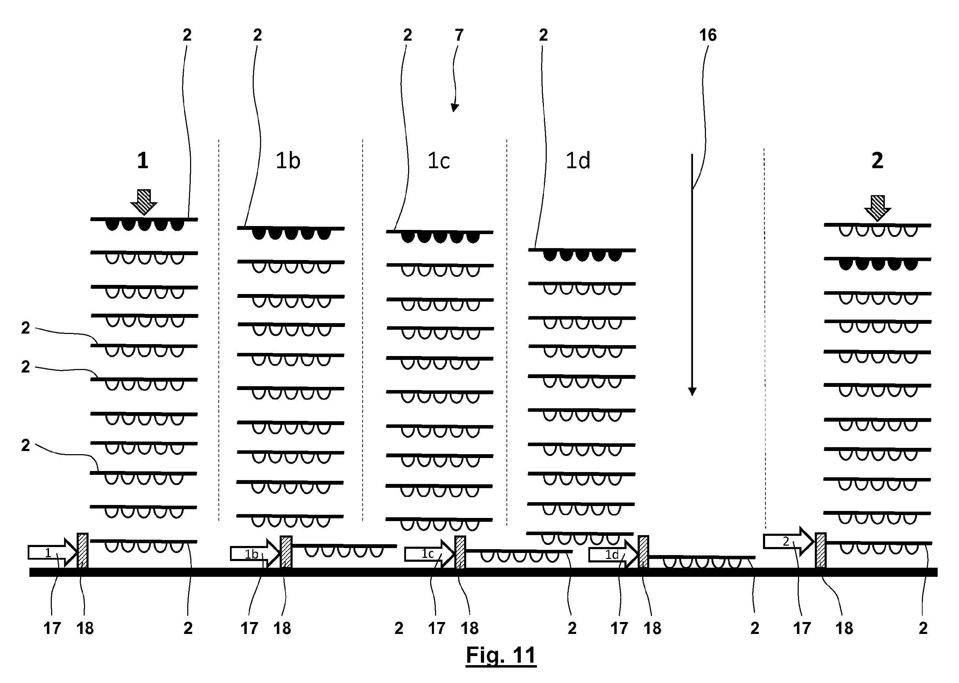

In **Fig. 11** ist wiederum eine mit Fig. 9 vergleichbare Darstellung gezeigt, die hier aber die Zwischentakte der in Fig. 10 gezeigten Stapelverarbeitung zeigt. Auch hier ist erkennbar, dass sich der jeweils unterste Blisterstreifen 2 während des Ausschiebevorgangs in der Abtransportrichtung 17 gleichzeitig in der Förderrichtung 16 bewegt.

### BEZUGSZEICHENLISTE

- 1: Blisterstreifenverpackungsmaschine
- 2: Blisterstreifen
- 3: Übergabevorrichtung
- 4: Blisterstreifenrad
- 5: Aufnahmearm
- 6: Saugelement
- 7: Blisterstreifenstapelbildungsvorrichtung
- 8: erstes Fördermittel
- 9: zweites Fördermittel
- 10: drittes Fördermittel
- 11: viertes Fördermittel
- 12: äußere Oberfläche
- 13: flexibles Fixierelement
- 14: Drehrichtung
- 15: Drehrichtung
- 16: Förderrichtung
- 17: Abtransportrichtung
- 18: Schieberelement
- 19: Übersetzungsgetriebe
- 20: Antriebswelle

## Patentansprüche

1. Blisterstreifenverpackungsmaschine (1), mit
einer Übergabevorrichtung (3) zum Aufnehmen und Weitergeben vereinzelter Blisterstreifen (2), und
einer stromabwärts der Übergabevorrichtung (3) angeordneten Blisterstreifenstapelbildungsvorrichtung (7), **dadurch gekennzeichnet, dass**
die Blisterstreifenstapelbildungsvorrichtung (7) eine Mehrzahl flexibler Fixierelemente (13) zum Aufnehmen von Stapeln von Blisterstreifen (2) aufweist.

2. Blisterstreifenverpackungsmaschine (1) nach Anspruch 1, **dadurch gekennzeichnet, dass** die flexiblen Fixierelemente (13) nicht biegesteif ausgebildet sind.

3. Blisterstreifenverpackungsmaschine (1) nach Anspruch 1 oder 2, **dadurch gekennzeichnet, dass** die flexiblen Fixierelemente (13) aus Fasern oder Draht ausgebildet sind.

4. Blisterstreifenverpackungsmaschine (1) nach mindestens einem der vorhergehenden Ansprüche, **dadurch gekennzeichnet, dass** die flexiblen Fixierelemente (13) als Borsten ausgebildet sind.

5. Blisterstreifenverpackungsmaschine (1) nach mindestens einem der vorhergehenden Ansprüche, **dadurch gekennzeichnet, dass** die Blisterstreifenstapelbildungsvorrichtung (7) weiterhin Folgendes aufweist:
ein erstes umlaufend antreibbares Fördermittel (8) mit einer äußeren Oberfläche (12), wobei die flexiblen Fixierelemente (13) an der äußeren Oberfläche (12) angeordnet sind und sich von dieser weg erstrecken, und
ein zweites umlaufend antreibbares Fördermittel (9) mit einer äußeren Oberfläche (12), wobei die flexiblen Fixierelemente (13) an der äußeren Oberfläche (12) angeordnet sind und sich von dieser weg erstrecken,
wobei das erste Fördermittel (8) und das zweite Fördermittel (9) so beabstandet und gegenüberliegend angeordnet und so gegenläufig antreibbar und die flexiblen Fixierelemente (13) so ausgebildet und angeordnet sind, dass zwischen den Fördermitteln (8, 9) Blisterstreifen (2) aufnehmbar und Stapel von Blisterstreifen (2) bildbar sind.

6. Blisterstreifenverpackungsmaschine (1) nach Anspruch 5, **dadurch gekennzeichnet, dass** das erste Fördermittel (8) und das zweite Fördermittel (9) so ausgebildet und angeordnet sind, dass ein erstes Paar gegenüberliegender Seitenflächen der Blisterstreifen (2) zwischen den flexiblen Fixierelementen (13) des ersten Fördermittels (8) und des zweiten Fördermittels (9) fixiert wird.

7. Blisterstreifenverpackungsmaschine (1) nach Anspruch 5 oder 6, **dadurch gekennzeichnet, dass** die Blisterstreifenstapelbildungsvorrichtung (7) Folgendes aufweist:
ein drittes umlaufend antreibbares Fördermittel (10) mit einer äußeren Oberfläche (12), wobei die flexiblen Fixierelemente (13) an der äußeren Oberfläche (12) angeordnet sind und sich von dieser weg erstrecken, und
ein viertes umlaufend antreibbares Fördermittel (11) mit einer äußeren Oberfläche (12), wobei die flexiblen Fixierelemente (13) an der äußeren Oberfläche (12) angeordnet sind und sich von dieser weg erstrecken,
wobei das dritte Fördermittel (10) und das vierte Fördermittel (11) so beabstandet und gegenüberliegend angeordnet und so gegenläufig antreibbar und die flexiblen Fixierelemente (13) so ausgebildet und angeordnet sind, dass zwischen den Fördermitteln (10, 11) Blisterstreifen (2) aufnehmbar und Stapel von Blisterstreifen (2) bildbar sind,
wobei das dritte (10) Fördermittel und das vierte Fördermittel (11) so um 90° versetzt zum ersten Fördermittel (8) und zweiten Fördermittel (9) angeordnet sind, dass ein um 90° versetzt zum ersten Paar gegenüberliegender Seitenflächen der Blisterstreifen (2) angeordnetes zweites Paar gegenüberliegender Seitenflächen der Blisterstreifen (2) zwischen den flexiblen Fixierelementen (13) des dritten Fördermittels (10) und des vierten Fördermittels (11) fixiert wird.

8. Blisterstreifenverpackungsmaschine (1) nach mindestens einem der vorhergehenden Ansprüche, **dadurch gekennzeichnet, dass** die Blisterstreifenstapelbildungsvorrichtung (7) direkt stromabwärts der Übergabevorrichtung (3) angeordnet ist und die Übergabevorrichtung (3) so ausgebildet ist, dass sie die Blisterstreifen (2) direkt an die Blisterstreifenstapelbildungsvorrichtung (7) weitergibt.

9. Blisterstreifenverpackungsmaschine (1) nach mindestens einem der vorhergehenden Ansprüche, **dadurch gekennzeichnet, dass** die Übergabevorrichtung (3) und/oder die Blisterstreifenstapelbildungsvorrichtung (7) getaktet angetrieben sind.

10. Blisterstreifenverpackungsmaschine (1) nach mindestens einem der vorhergehenden Ansprüche, **dadurch gekennzeichnet, dass** die Übergabevorrichtung (3) als rotierend angetriebenes Blisterstreifenrad (4) mit einer Mehrzahl von Aufnahmearmen (5) zur Aufnahme der Blisterstreifen (2) ausgebildet ist.

11. Blisterstreifenverpackungsmaschine (1) nach mindestens einem der vorhergehenden Ansprüche, **dadurch gekennzeichnet, dass** die Stapel von Blisterstreifen (2) senkrecht oder geneigt in der Blisterstreifenstapelbildungsvorrichtung (7) angeordnet sind.

12. Blisterstreifenstapelbildungsvorrichtung (7), mit
einem ersten umlaufend antreibbaren Fördermittel (8) mit einer äußeren Oberfläche (12), wobei eine Mehrzahl flexibler Fixierelemente (13) an der äußeren Oberfläche (12) angeordnet ist und sich von dieser weg erstreckt, und
einem zweiten umlaufend antreibbaren Fördermittel (9) mit einer äußeren Oberfläche (12), wobei eine Mehrzahl flexibler Fixierelemente (13) an der äußeren Oberfläche (12) angeordnet ist und sich von dieser weg erstreckt,
wobei das erste Fördermittel (8) und das zweite Fördermittel (9) so beabstandet und gegenüberliegend angeordnet und so gegenläufig antreibbar und die flexiblen Fixierelemente (13) so ausgebildet und angeordnet sind, dass zwischen den Fördermitteln (8, 9) Blisterstreifen (2) aufnehmbar und Stapel von Blisterstreifen (2) bildbar sind.

13. Blisterstreifenstapelbildungsvorrichtung (7), nach Anspruch 12, **dadurch gekennzeichnet, dass** die Blisterstreifenstapelbildungsvorrichtung (7) weiterhin Merkmale mindestens eines der Ansprüche der 1 bis 12 aufweist.
